# EUROPÄISCHE PATENTSCHRIFT

(11) **EP 3 248 733 B1**
(45) Veröffentlichungstag und Bekanntmachung des Hinweises auf die Patenterteilung: **15.09.2021**
(21) Anmeldenummer: 17000698.5
(22) Anmeldetag: 24.04.2017
(51) Int. Cl.: B25B 5/06, B25B 5/08

(54) **SPANNVORRICHTUNG**
CLAMPING DEVICE
DISPOSITIF DE SERRAGE

(30) Priorität: 26.04.2016 DE 102016005373
(43) Veröffentlichungstag der Anmeldung: 29.11.2017
(73) Patentinhaber: Westinghouse Electric Germany GmbH, 68167 Mannheim (DE)
(72) Erfinder: Ziegelmeyer, Fritz, D-76669 Bad Schönborn (DE)
(74) Vertreter: Eickmeyer, Dietmar

(56) Entgegenhaltungen:
- EP-A1- 2 253 419
- DE-U1- 29 500 115
- US-A1- 2005 121 846

## Beschreibung

Die Erfindung betrifft eine Spannvorrichtung zum Fixieren in einer Ausnehmung mit einer gemäß Oberbegriff des Anspruchs 1. Eine solche Vorrichtung ist beispielsweise aus DE 295 00 115 U1 bekannt.

Aus der DE29500115U1 ist ein Spannelement bekannt geworden, mit dem eine Last in einer Bohrung eines Bauteils festlegbar ist. Dazu wirken mehrere mit O-Ringen zusammengehaltene Teilschalen mit einem Spannelement zusammen. Mittels eines Tellerfederpaketes wird das Spannelement zum Verspannen in die Teilschalen eingedrückt und diese so mit einer konstanten Kraft gegen die Innenwand der Bohrung verspannt. Die an das Spannelement angebrachte Last weist in der Regel jedoch nach dem Verspannen einen bestimmten Abstand zum Bauteil auf. Mittels einer hydraulisch betätigten Mechanik wird nach dem Verspannen die Last - in der Regel ein Halter oder eine Halteplatte für eine Arbeitsmaschine - bis an das Bauteil heran bewegt. Hierdurch wird ein vollständiger Kontakt zwischen der Last und dem Bauteil sichergestellt. Auf diese Weise soll die Wirkung der durch die Arbeitsmaschine verursachten Vibrationen auf die Verspannung verringert werden.

Nachteilig bei diesem Stand der Technik ist es, dass bei der Positionierung des Spannelements in der Bohrung die Zentrierung nur mit einem vergleichsweise großen Spiel erreicht wird. Zudem müssen die Teilschalen der Spannhülse aufgrund der gewählten Konstruktion stabil ausgeführt sein, damit die jeweils wirkenden Kräfte der Verspannung in das Spannelement eingebracht werden können. Das führt unter anderem auch zu einem entsprechenden Gewicht des Spannelements selbst. Auch das Gewicht des Tellerfederpaketes hat einen merklichen Anteil am Gesamtgewicht. Allein das Tellerfederpaket bringt nämlich die konstanten Kräfte zum Verspannen auf und wird eine dementsprechende Masse besitzen. Ein typisches Gewicht für ein Spannelement nach diesem Stand der Technik beträgt mindestens 800 g. Auch dies vergleichsweise hohe Gewicht wirkt sich nachteilig auf die Verspannung aus.

Kommt ein solches Spannelement in kerntechnischen Anlagen zum Einsatz, die einer Strahlenbelastung unterliegen, wird auch eine entsprechend große Menge an Material der Strahlung ausgesetzt und damit verstrahlt. So werden solche Spannelemente beispielsweise bei Reparaturarbeiten an Wärmetauscherrohren in Kernkraftwerken eingesetzt. Außerdem kann es vorkommen, dass die Teilschalen im Gebrauch verschmutzen. Dann verringert sich die Haltekraft zwischen Bauteil und Spannelement. Dann muss das Spannelement ausgebaut und die Teilschalen entsprechend gesäubert werden, was zeitaufwendig ist und ebenfalls zu einer entsprechend höheren Strahlenbelastung führt. Die Strahlenbelastung der ausgeführten Arbeiten unterliegt der Kontrolle und wird daher gemessen.

Ausgehend von diesem Stand der Technik ist es Aufgabe der Erfindung eine Spannvorrichtung zum Fixieren in einer Ausnehmung anzugeben, deren Haltekraft im Betrieb einstellbar ist und bei der die Wirkung von Vibrationen auf die Verspannung verringert ist.

Die Aufgabe wird gelöst durch eine Spannvorrichtung gemäß Patentanspruch 1.

Derart ist vorteilhafterweise erreicht, dass die Haltekraft nicht mehr konstant, sondern im Bedarfsfalle zum Beispiel erhöhbar ist. Wird nämlich im Betrieb festgestellt, dass es Anzeichen dafür gibt, dass sich die Spannvorrichtung "losvibriert" hat der Bediener nun die Möglichkeit, durch einfaches Einstellen bzw. Erhöhen des Drucks im ersten Druckmedium auch die Haltekraft entsprechend zu erhöhen. Die Folge ist, dass die Spannvorrichtung mit höherer Haltekraft in der Ausnehmung verspannt ist. Zudem muss für Ausnehmungen verschiedener Abmessungen jeweils eine auf die betreffende Ausnehmung angepasste Spannhülse verwendet werden. Auch die notwendigen Haltekräfte ändern sich entsprechend. In vorteilhaft einfacher Weise ist die erfindungsgemäße Spannvorrichtung durch entsprechendes Einstellen des Drucks im Druckmedium auf diese veränderte Anforderung anpassbar. Der bisher erforderliche Einbau eines anderen Federpakets entfällt, da für diese Aufgabe kein Federpaket mehr benötigt wird. Entsprechend leichter ist die Spannvorrichtung insgesamt mit dem Vorteil, dass die durch die Vibration im Betrieb angeregte Masse vorteilhaft reduziert ist.

Zum Vorteil der reduzierten Masse kommt hinzu, dass das Bauteil an der zur Ausnehmung weisenden Seite des Gehäuses anbringbar ist, wodurch sichergestellt ist, dass das Bauteil zum Beispiel den Rohrboden, in dem die Ausnehmung zum Fixieren eingebracht ist, berührt. Damit ist die Auswirkung von Vibrationen, beispielsweise einer Arbeitsmaschine, die durch das Bauteil an der Spannvorrichtung befestigt ist, weiter verringert.

Eine vorteilhafte Weiterbildung der erfindungsgemäßen Spannvorrichtung ist dadurch gekennzeichnet, dass das das Bauteil tragende Gehäuse mithilfe eines zweiten Druckmediums bei der in Spannstellung befindlichen Spannhülse relativ zum Spanndorn bewegbar ist, dass die Kraft, mit der der Werkstückträger am Bauteil anliegt, durch einen Druck im zweiten Druckmedium regelbar ist, und dass die Drücke im ersten und im zweiten Druckmedium so geregelt sind, dass die Haltekraft größer ist als die Kraft zur Ausführung der Relativbewegung zwischen Gehäuse und Spanndorn.

Hierdurch ist der Abstand zwischen Bauteil und zum Beispiel einer Wand, in der sich eine Bohrung befindet in der die Spannvorrichtung verspannt werden soll, verringert.

Auf diese Weise können die im Betrieb von der Last eingebrachten Kräfte und Vibrationen vorteilhafterweise nur geringere Auswirkungen auf die Spannvorrichtung und deren Haltekraft ausüben.

Eine erfindungsgemäße Weiterbildung der Spannvorrichtung sieht vor, dass Kraft- und / oder Druckmessvorrichtungen vorhanden sind, mit denen die Haltekraft berechenbar ist, und dass die Haltekraft durch Druckerhöhung oder Druckverringerung regelbar ist.

Hierdurch wird erreicht, dass Druckanpassungen und damit auch die Anpassung der Haltekraft oder die Kraft für die Relativbewegung zwischen Last und Spanndorn an eine bestimmte Arbeitsbedingung automatisch anpassbar, also regelbar sind. Damit entfällt auch die manuelle Überwachung und Einstellung des Drucks oder der Drücke in den Druckmedien. Entsprechend ist eine mögliche Fehlerquelle vermieden.

Eine weitere vorteilhafte Ausgestaltung der Spannhülse sieht vor, dass die Spannhülse eine einstückig ausgebildete Spreizhülse ist, und dass die Spreizhülse wenigstens zwei Segmentzungen aufweist.

Durch die einstückige Ausführung der Spannhülse als Spreizhülse ist erreicht, dass die Stabilität des Bauteils erhöht ist. Zudem ist die Spreizhülse mit einer höheren Haltekraft im Vergleich zu bisherigen Spannhülse betreibbar. Zudem wird auch mit dieser erfindungsgemäßen Ausführung die Masse der Spannvorrichtung in vorteilhafter Weise verringert.

Ein weiterer Vorteil besteht darin, dass ein bisher immer vorhandenes Spiel zwischen den Teilschalen eines Spannelements vollständig entfällt. So war eine typische Genauigkeit für die Zentrierung in der Ausnehmung, in der das Spannelement gemäß Stand der Technik eingebracht wurde, die bisher erreicht werden konnte größer +/-0,3 mm. Mit der einstückigen Ausgestaltung der Spreizhülse sind Genauigkeiten besser als +/- 0,15 mm ohne weiteres erreichbar. Da die erfindungsgemäße Spannvorrichtung insbesondere bei Aufgaben eingesetzt ist, bei der es auf Genauigkeit der Positionierung bzw- Zentrierung ankommt, ist das ein wesentlicher Fortschritt zu den bisher bekannten Spannelementen.

Eine vorteilhafte Weiterbildung des Erfindungsgegenstandes betrifft eine Spannvorrichtung, die dadurch gekennzeichnet ist, dass die Segmentzungen eine solche Wanddicke bzw. einen solchen Wanddickenverlauf aufweisen, dass eine Federwirkung der Segmentzungen erreicht ist.

Durch die erfindungsgemäße Ausgestaltung der Spreizhülse *weisen die Segment*zungen eine vergleichsweise geringe Wandstärke auf. Zum einen ist auf diese Weise eine vorteilhafte Gewichtsreduktion erreicht, zum anderen ist eine Federwirkung entlang der Längserstreckung der Spreizhülse erreichbar, welche durch die federnd nachgiebigen Segmentzungen ermöglicht ist. Hierdurch ist es auch möglich, dass sich die Segmentzungen besonders einfach auf die Kontur der Ausnehmung anpassen, in die sich die Spannvorrichtung verklemmen soll. Es kann nämlich vorkommen, dass noch Schmutzpartikel oder sonstige Störkörper in der Ausnehmung vorhanden sind. Zudem ist hierdurch erreicht, dass die Kräfte, die beim Verklemmen im Bereich der Spreizhülse wirken, sich gleichmäßig über die Segmentzungen verteilen und damit symmetrisch auf die Innenwand der Ausnehmung wirken. Die Wirkung der Haltekräfte ist insgesamt verbessert.

Eine Weiterbildung der Spannvorrichtung sieht vor, dass eine Berührfläche zwischen dem Spanndorn und der Spreizhülse konusförmig ausgebildet ist, und dass der Winkel des Konus so gewählt ist, dass gerade noch keine Selbsthemmung zwischen dem Spanndorn und der Spreizhülse vorhanden ist.

Eine derartige Ausgestaltung der Konusse vermeidet, dass sich Spanndorn und Spreizhülse miteinander so verbinden, dass ein Lösen nur mit zusätzlichem Kraftaufwand möglich ist. *Hierdurch ist die Konstruktion* vereinfacht und ein unvorteilhafter möglicher Betriebszustand der Spannvorrichtung vermieden. Zudem wird das Verhältnis zwischen einer in Längsrichtung des Spanndorns wirkender Kraft und einer aus dieser Kraft resultierenden radialen Klemmkraft in vorteilhafterweise beeinflusst. Durch die vereinfachte Konstruktion ist ebenfalls eine Gewichtsreduzierung der erfindungsgemäßen Spannvorrichtung erreicht.

Die weitere Ausgestaltung des Erfindungsgegenstandes wird erreicht, indem die Spreizhülse aus einem Stahl mit einer Zugfestigkeit von mindestens 1800 N/mm² gefertigt ist und eine 0,2 Streckgrenze von mindestens 1600 N/mm² aufweist, und dass der Stahl eine Härte von wenigstens 52 HRC (Härte nach Rockwell C Verfahren) aufweist.

Durch diese Wahl des Werkstoffs zum Fertigen einer Spreizhülse wird in vorteilhafter Weise das Gewicht der Spreizhülse und damit Spannvorrichtung insgesamt weiter verringert.

Gemäß einer weiteren Ausführungsform der Spannvorrichtung sind die Segmentzungen durch Trennschlitze in Richtung der Längserstreckung der Spreizhülse gebildet und ein vorgebbarer Federweg der Segmentzungen ist durch die Länge der Trennschlitze erreichbar.

Damit ist auf besonders einfache Weise erreicht, dass die gewünschte Federwirkung allein durch die Länge der Trennschlitze erreichbar ist. So können zum Beispiel verschiedene Federwege und damit auch Federkräfte bei ein und derselben Spannhülsenform eingestellt und somit auf besonders einfache Weise auf jeden Einsatzfall angepasst werden.

Eine vorteilhafte Weiterbildung der Spannvorrichtung sieht vor, dass der Spanndorn an seinem zur Spreizhülse weisenden Ende konusförmig ist, dass die Spreizhülse einen auf den konusförmigen Teil des Spanndorns angepassten konusförmigen Bereich hat, und dass die Winkel der Konusse so gewählt sind, dass eine Berührfläche zwischen dem Spanndorn und der Spreizhülse in diesem Bereich im Spannzustand am größten ist.

Die Konusse weisen also zunächst im entspannten Zustand einen leicht unterschiedlichen Winkel auf. Sobald der Spanndorn in die Spreizhülse einfährt und damit die Spreizhülse gegen die Ausnehmung verspannt und die entsprechende Verklemmung dadurch erreicht ist, wird erfindungsgemäß die Berührfläche zwischen Spanndorn und Spreizhülse in diesem Bereich am größten sein. Hierdurch wird in vorteilhafter Weise der Verschleiß auf der Berührfläche minimiert, die Verteilung der Haltekräfte optimiert und insgesamt höhere Haltekräfte ermöglicht.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein Beispiel einer erfindungsgemäßen Spreizhülse,
- Fig. 2: eine Ansicht auf eine erfindungsgemäße Spannvorrichtung sowie
- Fig. 3: ein Schnittbild durch die erfindungsgemäße Spannvorrichtung.

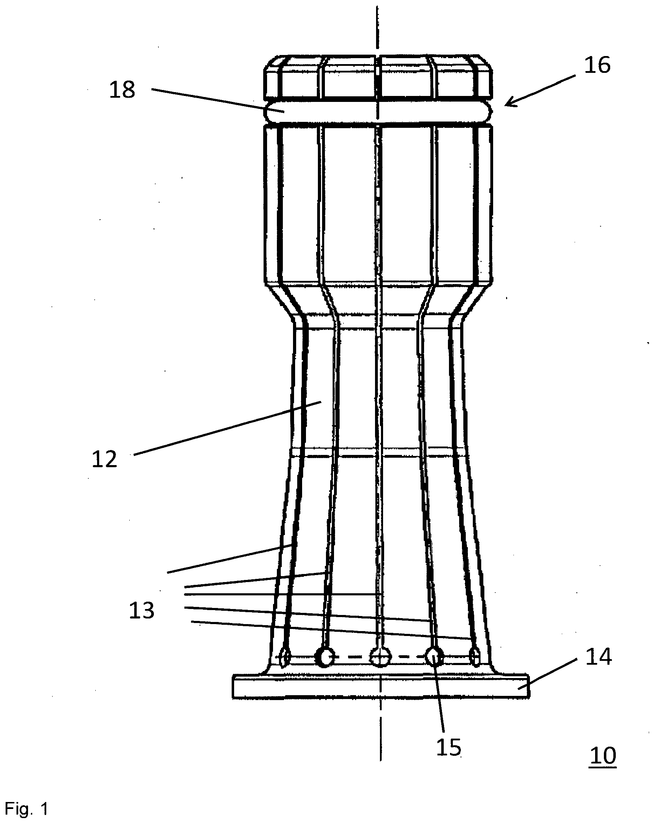

Fig. 1 zeigt eine seitliche Ansicht auf eine bevorzugte Ausführungsform einer erfindungsgemäßen Spreizhülse 10. Dabei ist eine Anzahl von Segmentzungen 12 erkennbar, die - in dieser Ansicht unten - in ein Bodenteil 14 übergehen. Die Spreizhülse 10 ist einstückig ausgestaltet. Damit ist erreicht, dass die Kräfte, die beim Verspannen auf die Segmentzungen 12 wirken, in das Bodenteil 14 auf besonders einfache Weise eingeleitet werden können. Zudem ist jede Segmentzunge 12 ohne Spiel an ihrem durch die Konstruktion vorgegeben Position fixiert. Die Spreizhülse 10 weist im gewählten Beispiel zwölf Segmentzungen 12 auf. Es hat sich nämlich herausgestellt, dass mit zwölf Segmentzungen 12 eine besonders günstige Klemmwirkung bei gleichzeitiger guter Positionierbarkeit der Spreizhülse 10 erreichbar ist. Grundsätzlich wird jedoch bereits eine Klemmwirkung mit nur 2 Segmentelementen erzielt, so dass jede Anzahl von Segmentelementen ab der Zahl 2 ohne weiteres innerhalb des Erfindungsgedankens wählbar ist. Wie genau die Klemmwirkung erzielt wird, wird in den weiteren Figuren gezeigt. In dieser Figur oben ist eine Nut 16 gezeigt, in der ein O-Ring 18 angeordnet ist. Dieser ist dafür vorgesehen, dass die Segmentzungen 12 während der Montage und im spannungsfreien Zustand der Spreizhülse 10 sich in einer definierten Position befinden.

Im gezeigten Beispiel ist die Spreizhülse 10 vollständig aus einem Stück gedreht. Als Material ist ein Stahl mit vergleichsweise hoher Zähigkeit gewählt und durch eine Wärmebehandlung mit einer erhöhten Härte versehen. Die Wanddicke der Segmentzungen 12 ist so gewählt, dass die einzelnen Segmentzungen 12 innerhalb ihrer technischen Auslegung federnd nachgiebig sind, ohne dass eine bleibende Verformung stattfindet. Jede Segmentzunge 12 ist durch entsprechende Schnitte 13 in Richtung der Längserstreckung der Spreizhülse 10 hergestellt, wobei die Schnitte 13 bis in den Nahbereich des Bodens 14 reichen. In diesem Nahbereich ist der Schnittgrund mit einer Bohrung 15 erweitert. Damit ist erreicht, dass die Materialspannungen in diesem Bereich reduziert sind.

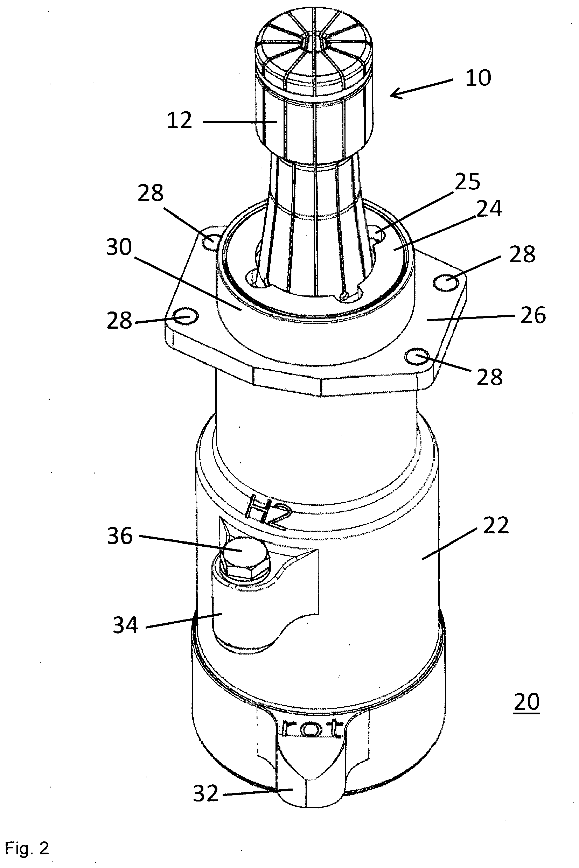

Fig. 2 zeigt eine Ansicht von außen auf eine erfindungsgemäße vormontierte Spannvorrichtung 20. Hierbei ist die Spannhülse 10 in einem Gehäuse 22 montiert, das in dieser Ansicht oben mit einer Deckelschraube 24 versehen ist, durch die die Segmentzungen 12 durchgreifen. Die Ausnehmungen 25 in der Deckelschraube 24 sind zur Montage beziehungsweise Demontage der Deckelschraube 24 vorgesehen. Im oberen Bereich des Gehäuses 22 zwischen einer Flanschplatte 26, die eine Anzahl Bohrungen 28 aufweist, und der Außenseite der Deckelschraube 24 ist ein erster Gehäusebereich 30 zylinderförmig ausgestaltet. Dieser Teil des Gehäuses 22 ist zum Beispiel zur Aufnahme eines in dieser Figur nicht dargestellten Werkzeugträgers gedacht, der zum Beispiel eine auf den Durchmesser des ersten Gehäusebereichs 30 angepasste Bohrung aufweist, so dass er zur Montage über die Segmentzungen 12 und über den ersten Gehäusebereich 30 bewegbar ist und die erste Flanschplatte 26 als Montageanschlag nutzt. Zudem ist der Werkzeugträger dann zum Beispiel mit einer Schraubverbindung und unter Verwendung der Bohrungen 28 mit der Flanschplatte 26 fest verbindbar und ortsfest positioniert.

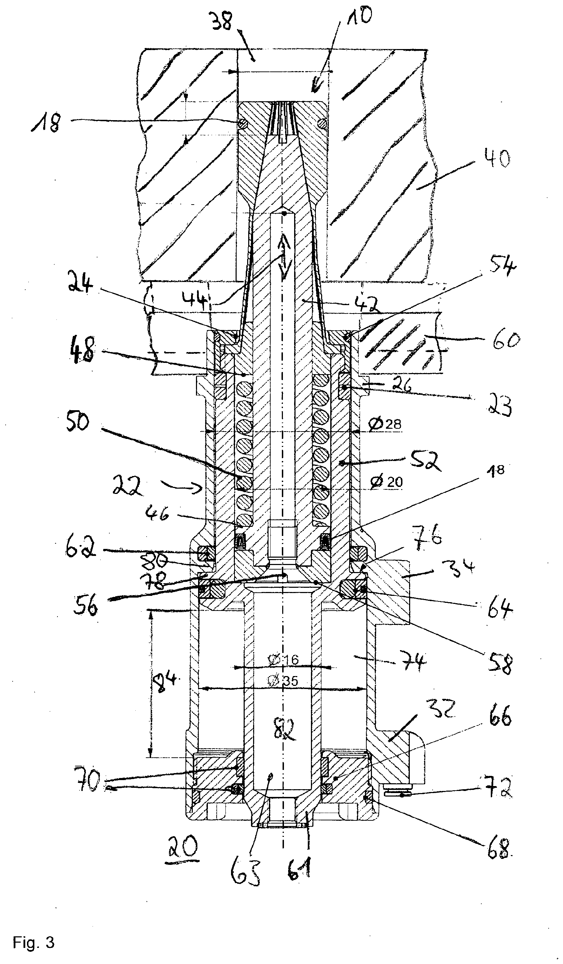

In dieser Darstellung im unteren Bereich des Gehäuses 22 ist eine erste Anformung 32 und im mittleren Bereich des Gehäuses 22 eine zweite Anformung 34 gezeigt, in die eine Entlüftungsschraube 36 eingeschraubt ist. Diese dient als Möglichkeit zur Entlüftung eines Druckmediums, im gewählten Beispiel ein Hydrauliköl, das über eine nicht dargestellte Druckleitung in eine in dieser Figur nicht sichtbaren Anschlusstülle geleitet wird. Weitere Funktionen werden in der Beschreibung zu Figur 3 näher erläutert.

Figur 3 zeigt ein Schnittbild durch die erfindungsgemäße Spannvorrichtung 20, die in einer weiteren Ausnehmung 38 eines Bauteils 40 verspannt und damit in einer bestimmten Position fixiert bzw. verankert ist. Die weitere Ausnehmung 38 könnte beispielsweise ein Loch oder eine Bohrung in einem Boden, einem Wärmetauscherboden, einer Wand oder einer Decke sein oder auch ein Rohr, zum Beispiel ein Rohr eines Wärmetauschers. Die Wirkung der Verspannung und damit der Verankerung der Spannvorrichtung 20 in der Ausnehmung 38 wird durch ein Zusammenwirken der Spreizhülse 10 mit einem Spanndorn 42 erreicht, der relativ zu Spreizhülse 10 in die Richtungen eines Doppelpfeils 44 in einer Spann- oder Lösestellung bewegbar ist. Gezeigt ist der Spanndorn 42 in seiner Lösestellung. Der O-Ring 18 gewährleistet, dass die Segmentzungen 12 der Spreizhülse 10 in diesem Zustand immer am Spanndorn 42 anliegen. Dabei läuft der Spanndorn 42 an seinem zur Spreizhülse 10 weisenden Ende konusförmig zu. Die Berührfläche zwischen der Spreizhülse 10 und dem konusförmigen Ende des Spanndorns 42 sind aufeinander angepasst, wobei der Winkel des Konus so gewählt ist, dass gerade noch keine Selbsthemmung zwischen Spanndorn 42 und Spreizhülse 10 vorhanden ist. Ist der Konuswinkel wie beschrieben gewählt, wird sich der Spanndorn 42 im Lösezustand der Spannvorrichtung 20 automatisch in Richtung hinaus aus der Spreizhülse 10 bewegen. Zudem ist die Außenfläche der Spreizhülse 10 im Bereich, in dem die Spreizhülse 10 mit dem Bauteil 40 verspannt ist, so auf den Durchmesser der weiteren Ausnehmung 38 angepasst, dass im verspannten Zustand eine größte mögliche Berührfläche vorhanden ist. Im gezeigten Beispiel ist diese Berührfläche die Mantelfläche eines Zylinders. Damit ist der Verschleiß der betreffenden Berührfläche vermindert. Die Spreizhülse 10 ist im Bereich der Berührfläche mit einer Beschichtung versehen, die zum Beispiel eine bestimmte Körnung aufweist, jedenfalls so ausgelegt ist, dass die Reibung an der Berührfläche zwischen der weiteren Ausnehmung 38 und der Spreizhülse 10 erhöht ist. Auf diese Weise ist dort die Klemmwirkung verbessert.

Eine Feder 50 ist zwischen einer Schulter 46 des Spanndorns 42 und einer Führungsbuchse 48 angeordnet, wobei der Spanndorn 42 gleitend in der Führungsbuchse 48 beweglich ist. Durch die Feder 50 ist das Herausgleiten des Spanndorns 42 aus der Spreizhülse 10 unterstützt. Dies ist nicht unbedingt erforderlich, jedoch verbessert sich durch die Feder 50 das Herausgleiten und der Spanndorn 42 erreicht auf besonders einfache Weise eine konstruktiv vorgegebene Position im Lösezustand der Spannvorrichtung 20. Die Spreizhülse 10 ist zwischen der Deckelschraube 24 und der Führungsbuchse 48 fixiert. Die Deckelschraube 24 ist mit einem Innenteil 52 verschraubt und mit einem Dichtring 54 gegen das Gehäuse 22 gegen Schmutzeinwirkung von außen, also von der Arbeitsumgebung abgedichtet. Ein Führungsteil 58 ist mit dem der Spreizhülse 10 abgewandten Ende des Spanndorns 42 mit einer Schraube 56 mit diesem verbunden und derart insgesamt eine Zylinder-Kolben-Anordnung geschaffen, bei der durch entsprechende Beaufschlagung der Stirnseite des Führungsteils 58 mit einem Druckmedium die Feder 50 entgegen ihrer Federkraft zusammengedrückt wird und auf diese Weise die Spannvorrichtung 20 in ihre Spannstellung gebracht ist. Eine entsprechende Druckleitung für das druckführende Medium kann an eine erste Anschlusstülle 61 des Innenteils 52 angeschlossen werden. Das Innenteil 52 bildet in diesem Bereich einen zylindrischen Druckraum 63 aus, sodass der an der ersten Anschlusstülle 61 anstehende Druck auch auf die Schraube 56 bzw. das Führungsteil 58 wirkt und damit eine entsprechende Kraftwirkung auf den Spanndorn 42 erreicht ist. Bei Verringerung oder Wegfall eines ausreichend hohen Drucks des druckführenden Mediums, zum Beispiel ein Hydrauliköl oder Wasser, wird sich der Spanndorn 42 unterstützt durch die Federkraft der Feder 50 aus der Spreizhülse 10 herausbewegen und einen Teil des druckführenden Mediums zurück in die Druckleitung fördern. Dementsprechend ist die Spannvorrichtung 20 in der Ausnehmung 38 jetzt in ihrer Lösestellung, also entspannt und lose in der Ausnehmung 38.

Die Spannvorrichtung 20 hat noch eine weitere Funktion, die anhand eines mit der Flanschplatte 26 verbundenen Werkstückträgers 60 gezeigt wird. Das Innenteil 52 bildet zusammen mit dem Gehäuse 22 eine weitere Zylinderkolbenanordnung, die mit dem Dichtring 54 sowie einem Dichtsystem 62 und einem weiteren Dichtsystem 64 gegen Austritt eines Druckmediums abgedichtet ist. Zwischen dem Gehäuse 22 und dem Innenteil 52 ist ein Führungsband 23 zwischengefügt, welches eine sichere Positionierung der beiden Bauteile während ihrer Relativbewegung gewährleistet. Zudem übergreift das Innenteil 52 das Federelement 50 und wirkt so als dessen Halter sowie als weitere Führung für die Relativbewegung zwischen den Innenteil 52 und dem Gehäuse 22. Ein Deckel 66 ist in dieser Figur am unteren Ende des Gehäuses 22 in dieses eingeschraubt und mit einem Dichtelement 68 zwischen Gehäuse 22 und Deckel 66 abgedichtet. Zudem gibt es ein weiteres Dichtelement 70 am Deckel 66, das den Deckel 66 gegen das Innenteil 52 abdichtet. Der Deckel 66 zusammen mit dem Gehäuse 22 und dem Innenteil 52 bilden einen Ringraum 74, der mit einer zweiten Anschlusstülle 72 mit einem druckführenden Medium, zum Beispiel Druckluft, beaufschlagt werden kann. Die Verbindungsleitung zwischen der zweiten Anschlusstülle 72 und dem Ringraum 74 ist in dieser Figur nicht erkennbar, da der Schnitt durch die Spannvorrichtung 20 in diesem Bereich lediglich durch die Wandung der ersten Anformungen 32 geführt ist. Entsprechend wird ein weiteres druckführendes Medium über eine in dieser Figur nicht dargestellten weiteren Anschlusstülle über die zweite Anformung 34 zu einem zweiten Ringraum 76 geführt. Der zweite Ringraum 76 ist in dieser Figur in seiner kleinstmöglichen Ausdehnung gezeigt, nämlich so, dass ein Kragen 78 des Innenteils 52 an einem Anschlag 80 des Gehäuses 22 anliegt. Das wird erreicht, indem die Druckverhältnisse im ersten 74 und im zweiten Ringraum 76 so gewählt sind, dass die hierdurch wirkenden Kräfte das Innenteil 52 bis zu dem Anschlag 80 bewegen.

Der Vorgang des Verspannens bzw. des Lösens der Spannvorrichtung 20 soll im Folgenden näher erläutert werden. Dazu ist die Spannvorrichtung 20, mit der ersten 61 und mit der weiteren - nicht dargestellten- Anschlusstülle in der zweiten Anformung 34 mit jeweils einer Hydraulikleitung sowie die zweite Anschlusstülle 72 mit einer Druckluftleitung verbunden. Die Drücke in den Hydraulikleitungen und der Druckluftleitung sind für jede Leitung separat einstellbar, wobei die Luft in der Druckluftleitung auf einen vorbestimmten konstanten Druck eingestellt ist, und dieser konstante Druck dementsprechend auch im Ringraum 74 eingestellt ist. Die Drücke in den Hydraulikleitungen sind jeweils separat regelbar. Hierfür sind eine oder mehrere Regeleinrichtungen vorhanden, die in dieser Figur jedoch nicht gezeigt sind, aber dafür eingerichtet sind, jeden einzelnen Druck separat einzustellen oder zu regeln. Die Druckregeleinrichtungen sind mit den Hydraulikleitungen oder Druckluftleitung verbunden, sodass der geregelte Druck auch in der Spannvorrichtung 20 wirkt. Dabei können die Druckregeleinrichtungen eine eigene Druckversorgung, zum Beispiel eine Hydraulikpumpe, einen Hydraulikspeicher, eine Druckluftversorgung, eine Pressluftflasche oder Ähnliches aufweisen sowie allgemein bekannte Steuer und Regelorgane zum Regeln des betreffenden Drucks. Um die Spannvorrichtung 20 in einen ersten Zustand, nämlich den Lösezustand, zu bringen, wird ein vorbestimmter Luftdruck an die zweite Anschlusstülle 72 angelegt, wobei die Hydraulikleitungen noch drucklos sind. Damit ist sichergestellt, dass der Kragen 78 des Innenteils 52 an dem Anschlag 80 des Gehäuses 22 anliegt und auf diese Weise der Ringraum 74 seine maximale Ausdehnung hat. Durch die Federkräfte der Feder 50, hier eine Wendelfeder, ist der Spanndorn 42 soweit dies konstruktiv vorgegeben ist aus der Spreizhülse 10 herausbewegt. Dies wird unterstützt durch den O-Ring 18, der zudem die Segmentzungen 12 der Spreizhülse 10 auf einen kleinstmöglichen Durchmesser zusammenhält. Auf diese Weise wird eine weitere Kraft in Richtung des Herausfahrens des Spanndoms 42 aufgebracht. Die Spannvorrichtung 20 ist damit in einem gelösten Zustand, dem ersten Zustand oder auch Grundzustand. Die Spannvorrichtung 20 wird nun in die Ausnehmung 38 verbracht. Um die Spannvorrichtung 20 in einen zweiten Zustand, dem Spannzustand zu bringen, wird der Hydraulikdruck in der Leitung zur ersten Anschlusstülle 61 erhöht. Zwischen dem Führungsteil 58 und der ersten Anschlusstülle 61 bildet das Innenteil 52 einen zylindrischen Raum 63 aus, der im Betrieb der Spannvorrichtung 20 mit dem druckführenden Medium gefüllt ist und so das Führungsteil 58 mit dem hydraulischen Druck beaufschlagt. Der Druck ist an dieser Stelle so hoch eingestellt, dass die resultierende Haltekraft über die Spreizhülse 10 in die Wand der Ausnehmung 38 höher, insbesondere wesentlich höher ist, als eine Kraft, die durch den Hydraulikdruck in der Leitung zur weiteren Anschlusstülle in der ersten Anformung 34 aufgebracht wird. Diese Kraft drückt durch Erweiterung des zweiten Ringraumes 76 den montierten Werkstückträger 60 gegen das Bauteil 40. Damit ist sichergestellt, dass kein Abstand zwischen dem Werkstückträger 60 und dem Bauteil 40 vorhanden ist.

Mit dem entsprechend hohen Druck an der ersten Anschlusstülle 61 wird sich das Führungsteil 58 entgegen der Federkräfte der Feder 50 bewegen und die Feder 50 zusammengedrückt. Auf diese Weise wird der Spanndorn 42 in die Spreizhülse 10 hineinbewegt. Die Spannvorrichtung 20 ist damit in einem gespannten Zustand, dem zweiten Zustand oder auch Arbeitszustand. Nach einer bestimmten Betriebszeit kann es zum Beispiel durch Vibrationen des Werkstückträgers 60 vorkommen, dass sich die Spreizhülse 10 in der weiteren Ausnehmung 38 lockert. Um diesen Effekt entgegenzuwirken, ist es vorgesehen, dass die Haltekraft der Spreizhülse 10 in der weiteren Ausnehmung 38 durch Erhöhen des Drucks im Druckraum 63 erhöht wird. Die Druckerhöhung kann dabei manuell erfolgen, nachdem der Effekt erkannt ist, er kann jedoch auch automatisch und damit geregelt erfolgen, zum Beispiel, wenn eine bestimmte Vibrationsstärke erreicht ist, oder indem die verschiedenen Kräfte, Haltekräfte, aus den Rütteln resultierende Kräfte usw. gemessen oder berechnet werden.

Durch das Verhältnis der Länge des Spanndorns 42 zu der Länge des freien Federweges der Feder 50 sind die Genauigkeit und die Stabilität der Spannvorrichtung 20 beeinflussbar. Je größer dieses Verhältnis gewählt wird, umso mechanisch stabiler wird die Spannvorrichtung 20 sein und entsprechend wird die Genauigkeit der Spannvorrichtung 20 steigen.

Über eine der Druckluftleitungen an der zweiten Anschlusstülle 72 wird ständig ein vorbestimmter Luftdruck eingestellt. Auf diese Weise ist sichergestellt, dass allein mit einer Regelung des Hydraulikdruckes im zweiten Ringraum 76 der mit einer weiteren Hydraulikleitung über die weitere Anschlusstülle einstellbar ist, das Innenteil 52 relativ zum Gehäuse 22 bewegt ist. Dadurch ist es möglich, dass ein Werkstückträger 60, der möglicherweise nach dem Einfahren der Spreizhülse 10 in die weitere Ausnehmung 38 noch einen kleinen Abstand zum Bauteil 40 hat, an dieses Bauteil 40 heranbewegt wird, sodass es vollständig anliegt. Dieser Zustand des vollständigen Anliegens des Werkstückträgers 60 an das Bauteil 40 soll durch die gestrichelten Linien gezeigt sein, die den Umriss des Werkstückträgers 60 nach dem Anliegen an das Bauteil 40 zeigen. Wird der Druck im zweiten Ringraum 76 weiter erhöht, erhöhen sich auch die Kräfte, die die Relativbewegung zwischen dem Innenteil 52 und dem Gehäuse 22 bewirken.

Soll die Spannvorrichtung 20 wieder aus der weiteren Ausnehmung 38 herausgenommen werden, so ist diese zu lösen, indem die zuvor beschriebenen Arbeitsschritte in umgekehrter Reihenfolge vorgenommen werden.

Damit ist auch erreicht, dass mit der Regelung von nur zwei Hydraulikluftleitungen, nämlich denen, die an der ersten Anschlusstülle 61 sowie an der weiteren Anschlusstülle angeschlossen sind, die komplette Spannvorrichtung in ihre Zustände Verklemmen oder Lösen verbringbar sind.

### Bezugszeichenliste

- 10: Spreizhülse
- 12: Segmentzungen
- 13: Schnitt
- 14: Bodenteil
- 15: Bohrung
- 16: Nut
- 18: O-Ring
- 20: Spannvorrichtung
- 22: Gehäuse
- 23: Führungsband
- 24: Deckelschraube
- 25: Ausnehmungen
- 26: Flanschplatte
- 28: Bohrungen
- 30: erster Gehäusebereich
- 32: erste Anformung
- 34: zweite Anformung
- 36: Entlüftungsschraube
- 38: weitere Ausnehmung
- 40: Bauteil
- 42: Spanndorn
- 44: Doppelpfeil
- 46: Schulter
- 48: Führungsbuchse
- 50: Feder
- 52: Innenteil
- 54: Dichtring
- 56: Schraube
- 58: Führungsteil
- 60: Werkstückträger
- 61: erste Anschlusstülle
- 62: Dichtsystem
- 63: Druckraum
- 64: weiteres Dichtsystem
- 66: Deckel
- 68: Dichtelement
- 70: weiteres Dichtelement
- 72: zweite Anschlusstülle
- 74: Ringraum
- 76: zweiter Ringraum
- 78: Kragen
- 80: Anschlag
- 82: Kolbendurchmesser
- 84: Hublänge

## Patentansprüche

1. Spannvorrichtung zum Fixieren in einer Ausnehmung (38) eines Bauteils (40) mit einer Spannhülse, die mit einem Innenteil (52) verbunden ist, wobei ein Spanndorn (42) relativ zur Spannhülse bewegbar ist, wobei das Innenteil (52) zumindest teilweise in einem Gehäuse (22) geführt ist, wobei ein Werkstückträger (60) an der zur Ausnehmung (38) weisenden Seite des Gehäuses (22) anbringbar ist, wobei das Gehäuse (22) bei der in Spannstellung befindlichen Spannhülse relativ zum Spanndorn (42) bewegbar ist, wobei das den Werkstückträger (60) tragende Gehäuse (22) mithilfe eines zweiten Druckmediums bei der in Spannstellung befindlichen Spannhülse relativ zum Spanndorn (42) bewegbar ist, sodass der Werkstückträger (60) vollständig am Bauteil (40) anliegt
**dadurch gekennzeichnet, dass**
der Spanndorn (42) zum Verspannen mithilfe eines ersten Druckmediums relativ zur Spannhülse bewegbar ist, dass die Haltekraft des Verspannens durch einen Druck im ersten Druckmedium einstellbar ist, dass die Kraft mit der der Werkstückträger (60) am Bauteil anliegt durch einen Druck im zweiten Druckmedium regelbar ist, und dass die Drücke im ersten und im zweiten Druckmedium so geregelt sind, dass die Haltekraft größer ist als die Kraft zur Ausführung der Relativbewegung zwischen Gehäuse (22) und Spanndorn (42).

2. Spannvorrichtung nach Anspruch 1, **dadurch gekennzeichnet, dass** Kraft- und / oder Druckmessvorrichtungen vorhanden sind, mit denen die Haltekraft berechenbar ist, und dass die Haltekraft durch Druckerhöhung oder Druckverringerung regelbar ist.

3. Spannvorrichtung nach Anspruch 1 oder 2, **dadurch gekennzeichnet, dass** die Spannhülse eine einstückig ausgebildete Spreizhülse (10) ist, und dass die Spreizhülse (10) wenigstens zwei Segmentzungen (12) aufweist.

4. Spannvorrichtung nach Anspruch 3, **dadurch gekennzeichnet, dass** die Segmentzungen (12) eine solche Wanddicke bzw. einen solchen Wanddickenverlauf aufweisen, dass eine Federwirkung der Segmentzungen (12) erreicht ist.

5. Spannvorrichtung nach Anspruch 3 oder 4, **dadurch gekennzeichnet, dass** eine Berührfläche zwischen dem Spanndorn (42) und der Spreizhülse (10) konusförmig ausgebildet ist, und dass die Winkel der Konusse so gewählt sind, dass die Ausgestaltung der Konusse vermeidet, dass sich Spanndorn (42) und Spreizhülse (10) miteinander so verbinden, dass ein Lösen nur mit zusätzlichem Kraftaufwand möglich ist.

6. Spannvorrichtung nach einem der vorherigen Ansprüche 3 bis 5, **dadurch gekennzeichnet, dass** die Spreizhülse (10) aus einem Stahl mit einer Zugfestigkeit von mindestens 1800 N/mm² und einer 0,2 Streckgrenze von mindestens 1600N/mm² gefertigt ist, und dass der Stahl eine Härte von wenigstens 52 HRC aufweist.

7. Spannvorrichtung nach einem der vorherigen Ansprüche 3 bis 6, **dadurch gekennzeichnet, dass** die Segmentzungen (12) durch Trennschlitze (13) in Richtung der Längserstreckung der Spreizhülse (10) gebildet sind, und dass ein vorgebbarer Federweg der Segmentzungen (12) durch die Länge der Trennschlitze (13) erreichbar ist.

8. Spannvorrichtung nach einem der vorherigen Ansprüche, **dadurch gekennzeichnet, dass** der Spanndorn (42) an seinem zur Spannhülse weisenden Ende konusförmig ist, dass die Spannhülse einen auf den konusförmigen Teil des Spanndorns angepassten konusförmigen Bereich hat, und dass die Winkel der Konusse so gewählt sind, dass eine Berührfläche zwischen dem Spanndorn (42) und der Spreizhülse (10) in diesem Bereich im Spannzustand am größten ist.

## Claims

1. Clamping device for fixing in a recess (38) of a component (40), having a clamping sleeve which is connected to an internal part (52), wherein a clamping mandrel (42) is movable relative to the clamping sleeve, wherein the internal part (52) is at least partially guided in a housing (22), wherein a workpiece carrier (60) is able to be attached to that side of the housing (22) that faces the recess (38), wherein the housing (22), when the clamping sleeve is situated in the clamping position, is movable relative to the clamping mandrel (42), wherein the housing (22) that supports the workpiece carrier (60), when the clamping sleeve is situated in the clamping position, with the aid of a second pressurizing medium is movable relative to the clamping mandrel (42) such that the workpiece carrier (60) bears completely on the component (40),
**characterized in that**
the clamping mandrel (42) for bracing, with the aid of a first pressurizing medium, is movable relative to the clamping sleeve, **in that** the holding force of the bracing action is controllable by a pressure in the first pressurizing medium, **in that** the force by way of which the workpiece carrier (60) bears on the component is controllable by a pressure in the second pressurizing medium, and **in that** the pressures in the first pressurizing medium and in the second pressurizing medium are controlled such that the holding force is greater than the force for carrying out the relative movement between the housing (22) and the clamping mandrel (42).

2. Clamping device according to Claim 1, **characterized in that** force-measuring and/or pressure-measuring devices by way of which the holding force is able to be computed are present, and **in that** the holding force is controllable by increasing or decreasing the pressure.

3. Clamping device according to Claim 1 or 2, **characterized in that** the clamping sleeve is an integrally configured expansion sleeve (10), and **in that** the expansion sleeve (10) has at least two segment tongues (12).

4. Clamping device according to Claim 3, **characterized in that** the segment tongues (12) have such a wall thickness, or such a wall thickness profile, respectively, that a spring effect of the segment tongues (12) is achieved.

5. Clamping device according to Claim 3 or 4, **characterized in that** a contact face between the clamping mandrel (42) and the expansion sleeve (10) is configured so as to be conical, and **in that** the angles of the cones are chosen such that the design embodiment of the cones avoids that the clamping mandrel (42) and the expansion sleeve (10) connect to one another such that releasing is possible only with an additional effort in terms of force.

6. Clamping device according to one of preceding Claims 3 to 5, **characterized in that** the expansion sleeve (10) is made of steel with a tensile strength of at least 1800 N/mm² and a 0.2 yield point of at least 1600 N/mm², and **in that** the steel has a hardness of at least 52 HRC.

7. Clamping device according to one of preceding claims 3 to 6, **characterized in that** the segment tongues (12) are formed by separation slots (13) in the direction of the longitudinal extent of the expansion sleeve (10), and **in that** a pre-definable spring travel of the segment tongues (12) is achievable by the length of the separation slots (13).

8. Clamping device according to one of the preceding claims, **characterized in that** the clamping mandrel (42) at the end thereof that faces the clamping sleeve is conical, **in that** the clamping sleeve has a conical region that is adapted to the conical part of the clamping mandrel, and **in that** the angles of the cones are chosen such that a contact face between the clamping mandrel (42) and the expansion sleeve (10), in the clamping state, is largest in this region.

## Revendications

1. Dispositif de serrage servant à la fixation dans un évidement (38) d'un composant (40), comportant un manchon de serrage qui est relié à une partie intérieure (52), un mandrin de serrage (42) étant déplaçable relativement au manchon de serrage, la partie intérieure (52) étant guidée au moins partiellement dans un boîtier (22), un support de pièce (60) pouvant être monté sur le côté du boîtier (22) tourné vers l'évidement (38), le boîtier (22) étant déplaçable relativement au mandrin de serrage (42) lorsque que le manchon de serrage se trouve dans la position de serrage, le boîtier (22) supportant le support de pièce (60) étant déplaçable relativement au mandrin de serrage (42) à l'aide d'un deuxième fluide sous pression lorsque le manchon de serrage se trouve dans la position de serrage, de sorte que le support de pièce (60) s'appuie complètement contre le composant (40),
**caractérisé en ce que**
le mandrin de serrage (42) est déplaçable relativement au manchon de serrage à l'aide d'un premier fluide sous pression pour le serrage, **en ce que** la force de retenue du serrage peut être réglée par une pression dans le premier fluide sous pression, **en ce que** la force par laquelle le support de pièce (60) s'appuie contre le composant peut être régulée par une pression dans le deuxième fluide sous pression, et **en ce que** les pressions dans le premier et dans le deuxième fluide sous pression sont régulées de telle sorte que la force de retenue soit supérieure à la force servant à effectuer le mouvement relatif entre le boîtier (22) et le mandrin de serrage (42).

2. Dispositif de serrage selon la revendication 1, **caractérisé en ce que** des dispositifs de mesure de force et/ou de pression sont présents, à l'aide desquels la force de retenue peut être calculée, et **en ce que** la force de retenue peut être régulée par augmentation de pression ou réduction de pression.

3. Dispositif de serrage selon la revendication 1 ou 2, **caractérisé en ce que** le manchon de serrage est un manchon à expansion (10) réalisé d'une seule pièce, et **en ce que** le manchon à expansion (10) comprend au moins deux languettes formant segments (12).

4. Dispositif de serrage selon la revendication 3, **caractérisé en ce que** les languettes formant segments (12) présentent une épaisseur de paroi ou un profil d'épaisseur de paroi tels qu'une action de ressort des languettes formant segments (12) soit obtenue.

5. Dispositif de serrage selon la revendication 3 ou 4, **caractérisé en ce qu'**une surface de contact entre le mandrin de serrage (42) et le manchon à expansion (10) est réalisée en forme de cône, et **en ce que** les angles des cônes sont sélectionnés de telle sorte que la configuration des cônes empêche que le mandrin de serrage (42) et le manchon à expansion (10) soient reliés l'un à l'autre de sorte qu'un détachement ne soit possible que par un apport de force supplémentaire.

6. Dispositif de serrage selon l'une des revendications précédentes 3 à 5, **caractérisé en ce que** le manchon à expansion (10) est fabriqué à partir d'un acier présentant une résistance à la traction d'au moins 1800 N/mm² et une limite d'élasticité à 0,2 % d'au moins 1600 N/mm², et **en ce que** l'acier présente une dureté d'au moins 52 HRC.

7. Dispositif de serrage selon l'une des revendications précédentes 3 à 6, **caractérisé en ce que** les languettes formant segments (12) sont formées par des fentes de séparation (13) dans la direction de l'étendue longitudinale du manchon à expansion (10), et **en ce qu'**une course de ressort pouvant être prédéfinie des languettes formant segments (12) peut être obtenue par la longueur des fentes de séparation (13).

8. Dispositif de serrage selon l'une des revendications précédentes, **caractérisé en ce que** le mandrin de serrage (42) est en forme de cône à son extrémité tournée vers le manchon de serrage, **en ce que** le manchon de serrage a une région en forme de cône adaptée à la partie en forme de cône du mandrin de serrage, et **en ce que** les angles des cônes sont sélectionnés de telle sorte qu'une surface de contact entre le mandrin de serrage (42) et le manchon à expansion (10) soit la plus grande dans cette région dans l'état serré.
